(19) Europäisches Patentamt
European Patent Office
Office européen des brevets

(11) **EP 0 501 127 B1**

(12) **EUROPÄISCHE PATENTSCHRIFT**

(45) Veröffentlichungstag und Bekanntmachung des Hinweises auf die Patenterteilung:
**11.09.1996 Patentblatt 1996/37**

(51) Int. Cl.$^6$: **B60H 3/00**

(21) Anmeldenummer: **92100786.0**

(22) Anmeldetag: **18.01.1992**

(54) **Vorrichtung zur Steuerung der Belüftung eines Innenraumes, insbesondere bei Kraftfahrzeugen**

Ventilation control device of a passenger compartment in particular for motor vehicles

Dispositif de contrôle de la ventilation de l'habitacle en particulier pour les voitures automobiles

(84) Benannte Vertragsstaaten:
FR GB IT SE

(30) Priorität: **27.02.1991 DE 4106078**

(43) Veröffentlichungstag der Anmeldung:
**02.09.1992 Patentblatt 1992/36**

(73) Patentinhaber: **MERCEDES-BENZ AG**
**70327 Stuttgart (DE)**

(72) Erfinder:
• **Abthoff, Jörg, Dr.**
**W-7067 Plüderhausen (DE)**
• **Schuster, Hans-Dieter**
**W-7060 Schorndorf (DE)**
• **Nunnemann, Friedhelm**
**W-7057 Winnenden 7 (DE)**
• **Loose, Gunter**
**W-7148 Remseck 3 (DE)**
• **Osswald, Michael**
**W-7140 Ludwigsburg (DE)**
• **Busch, Michael-Rainer**
**W-7333 Ebersbach (DE)**
• **Fortkord, Markus**
**W-7050 Waiblingen (DE)**

(56) Entgegenhaltungen:
EP-A- 0 042 287        EP-A- 0 053 394
EP-A- 0 065 371        WO-A-89/06608
DE-A- 3 304 324        DE-A- 3 501 527
DE-A- 3 526 462        DE-A- 3 731 745
US-A- 4 478 049

**Beschreibung**

Die Erfindung betrifft eine Vorrichtung zur Steuerung der Belüftung eines Innenraumes, insbesondere bei Kraftfahrzeugen, in Abhängigkeit von Signalen eines im wesentlichen nur von Außenluft beaufschlagten Schadstoffsensors, mit von der Schadstoffkonzentration abhängiger Umschaltung zwischen Zuluft- und Umluftbetrieb, wobei mittels eines Rechners unter Berücksichtigung der Sensorsignale, der jeweiligen Betriebsweise - Zuluft- oder Umluftbetrieb - sowie vorgegebener und abrufbarer Erfahrungswerte eine mit der Schadstoffkonzentration im Innenraum korrelierte erste Größe bestimmt und mit einer aus den Sensorsignalen abgeleiteten, mit der Schadstoffkonzentration der Außenluft korrelierten zweiten Größe verglichen wird und je nach dem Ergebnis dieses Vergleiches entweder der Zuluft- oder der Umluftbetrieb eingeschaltet werden bzw. bleiben.

Während der Fahrt soll in den Fahrgastraum von Kraftfahrzeugen in der Regel ständig Frischluft von außen zugeführt werden, um zu vermeiden, daß der Gehalt an Kohlendioxid in der Luft im Innenraum durch die Atemtätigkeit der Personen im Innenraum übermäßig ansteigen und zu Ermüdungserscheinungen der Mitfahrenden führen kann. Außerdem würde ohne Frischluftzufuhr auch der Feuchtigkeitsgehalt der Luft im Innenraum unerwünscht ansteigen.

Andererseits ist es des öfteren zweckmäßig, die Frischluftzufuhr, d.h. den Zuluftbetrieb, zu unterbinden bzw. abzuschalten und damit auf den sogenannten Umluftbetrieb überzugehen, bei dem die Luft im Innenraum nur noch aufgrund von Konvektion oder mittels eines Gebläses im Umlauf bewegt wird.

Die Umschaltung von Zuluft- auf Umluftbetrieb erfolgt bei Kraftfahrzeugen in der Regel mittels einer Luftklappe, die in ihrer Zuluftstellung die Eingangsseite eines ausgangsseitig mit dem Innenraum verbundenen Gebläses mit einem Außenluftanschluß und in der Umluftstellung mit einem innenraumseitigen Anschluß verbindet.

In diesem Zusammenhang ist es bekannt, die Umsteuerung zwischen Zuluft- und Umluftbetrieb automatisch vorzunehmen, und zwar in Abhängigkeit von den Signalen eines Schadstoffsensors, der von der Außenluft beaufschlagt wird und damit Signale erzeugt, die mit der Schadstoffkonzentration in der Außenluft korreliert sind.

Aus der WO 89/06608 ist eine Vorrichtung der eingangs angegebenen Art bekannt. Bei der Ermittlung der rechnerisch ermittelten, mit der Schadstoffkonzentration im Innenraum korrelierten ersten Größe können nach dieser Druckschrift gegebenenfalls die Signale zusätzlicher Sensoren ausgewertet werden, mit denen sich erkennen läßt, ob ein Sitzplatz besetzt ist oder nicht. Dadurch wird eine besonders realistische Ermittlung der Schadstoffkonzentration im Innenraum möglich.

Bei einer weiteren, aus der DE 33 04 324 A1 bekannten Ausführungform ist eine Doppelanordnung von Schadstoffsensoren vorgesehen, welche beide von Außenluft beaufschlagt werden. Dabei ist der eine Schadstoffsensor in einem Hauptstrom der Außenluft und der andere Schadstoffsensor in einem vergleichsweise schwachen Nebenstrom der Außenluft untergebracht, so daß Änderungen der Schadstoffkonzentration der Außenluft am einen Schadstoffsensor schnell wirksam und registriert werden, während der andere Schadstoffsensor Konzentrationsänderungen der Schadstoffe vergleichsweise „langsam merkt". Der letztere Schadstoffsensor registriert damit einen zeitlichen Mittelwert der Schadstoffkonzentration, während der erstere Schadstoffsensor den jeweils aktuellen Istwert der Schadstoffkonzentration erkennt. Auf diese Weise sollen sich Änderungen der Schadstoffkonzentration sowie die Richtung der Änderung besonders gut erkennen lassen. Der Umluftbetrieb wird im wesentlichen nur dann eingeschaltet, wenn eine vergleichsweise schnelle Erhöhung der Schadstoffkonzentration auftritt.

Aufgabe der Erfindung ist es nun, bei einer Vorrichtung der eingangs angegebenen Art die Meßgenauigkeit zu erhöhen.

Diese Aufgabe wird erfindungsgemäß dadurch gelöst, daß der Sensor in einem Gehäuse, dessen Wand - zumindest bereichsweise - für Gase sowie die zu überwachenden Schadstoffe durchlässig ist, gegen starke Luft- bzw. Gasströmung und/oder Wassertropfen geschützt untergebracht ist.

Dabei kann ein Wandbereich durch eine gasdurchlässige Membran abgeschlossen sein; die übrigen Wandbereiche sind dagegen gas- und flüssigkeitsdicht.

Statt einer Membran kann gegebenenfalls auch ein Vlies angeordnet sein.

Aufgrund dieser Anordnung ändert sich die Schadstoffkonzentration in der Kammer praktisch gleichzeitig mit der Schadstoffkonzentration in der Außenluft. Jedoch kann vorteilhafterweise vermieden werden, daß der Schadstoffsensor bei unterschiedlichen Fahrgeschwindigkeiten oder bei wechselhaftem Wetter unterschiedlich schnell strömender Luft und/oder Spritzwasser bzw. Nebelströpfchen ausgesetzt wird und allein aufgrund einer Änderung dieser Parameter stark unterschiedliche Signale erzeugt.

Im übrigen wird bezüglich vorteilhafter Merkmale auf die Ansprüche sowie die nachfolgende Erläuterung der Erfindung anhand der Zeichnung verwiesen, in der vorteilhafte Ausführungsformen dargestellt sind.

Dabei zeigt

Fig. 1      ein schematisiert dargestelltes Kraftfahrzeug mit einem erfindungsgemäß ausgestalteten Belüftungs- und Umluftsystem für den Innenraum,

Fig. 2      ein Flußdiagramm zur Erläuterung der Arbeitsweise dieses Systemes und

Fig. 3      ein Schnittbild einer einen Schadstoffsensor aufnehmenden Kammer, die gegenüber der Außenluft durch eine gasdurchlässige Membran abgeschlossen ist.

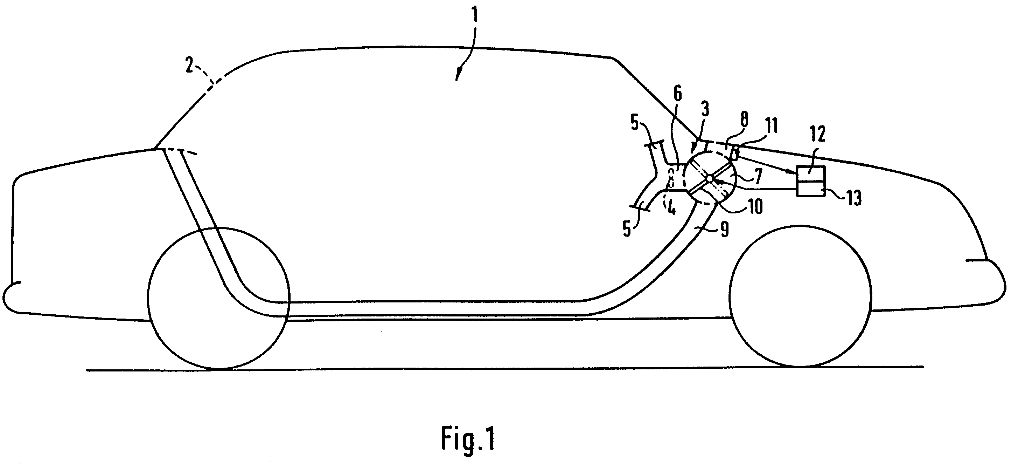

Der Innenraum 1 des in Fig. 1 schematisch dargestellten Personenkraftwagens besitzt in grundsätzlich bekannter Weise Entlüftungsöffnungen 2, die in an sich bekannter Weise so angeordnet bzw. ausgebildet sind, daß bei der Fahrt des Fahrzeuges praktisch nur ein Luftstrom in Entlüftungsrichtung aufzutreten vermag. Dies kann beispielsweise durch Rückschlagklappen oder dadurch gewährleistet werden, daß der Unterdruck ausgenutzt wird, welcher bei der Fahrt durch die das Fahrzeug umströmende Luft im Bereich der Entlüftungsöffnungen erzeugt wird.

Zur Frischluftzufuhr in den Innenraum 1 dient ein Belüftungssystem 3 mit einem Gebläse 4, welches ausgangsseitig über Ausblasdüsen 5 mit dem Innenraum 1 und eingangsseitig über eine Saugleitung 6 mit einer Eingangskammer 7 verbunden ist. Die Eingangskammer 7 ist über einen Eingangskanal 8 mit der Fahrzeugaußenseite und über einen Eingangskanal 9 mit dem Innenraum 1 des Fahrzeuges verbunden. Innerhalb der Eingangskammer 7 ist eine verstellbare Klappe 10 derart angeordnet, daß die Saugleitung 6 in der dargestellten Zuluftstellung der Klappe 10 mit dem zur Fahrzeugaußenseite führenden Eingangskanal 8 und in der strichliert dargestellten Umluftstellung mit dem an den Innenraum 1 angeschlossenen Eingangskanal 9 verbunden ist. In der Zuluftstellung wird also Frischluft von der Außenseite des Fahrzeuges in den Innenraum 1 eingeblasen. In der Umluftstellung kann die Luft im Innenraum 1 lediglich mittels des Gebläses umgewälzt werden, ein Zutritt von Frischluft in den Innenraum wird durch die Klappe 10 verhindert. Die Umluftstellung ist strichliert dargestellt.

Gegebenenfalls kann im Strömungsweg der Luft, beispielsweise hinter dem Gebläse 4, noch eine nicht dargestellte Klimaanlage angeordnet sein.

Am Eingangskanal 8 - oder an einem anderen für die Luft außerhalb des Fahrzeuges leicht erreichbaren Ort - ist ein Schadstoffsensor 11 angeordnet, dessen Signale sich entsprechend der Schadstoffkonzentration in der Luft auf der Außenseite des Fahrzeuges (Außenluft) ändern und dem Rechner 12 einer rechnergesteuerten Stellvorrichtung 13 für die Klappe 10 zugeführt werden. Darüber hinaus wird dem Rechner 12 noch ein weiteres Signal zugeführt, welches sich entsprechend der Leistung des Gebläses 4 ändert. Wenn beispielsweise das Gebläse 4 mittels eines Elektromotors mit unterschiedlicher Geschwindigkeit angetrieben werden soll, kann als solches Signal die am Motor abfallende, je nach Drehzahl unterschiedliche elektrische Spannung ausgenutzt werden.

Erfindungsgemäß soll der Rechner 12 über die von ihm gesteuerte Stellvorrichtung 13 die Klappe 10 so betätigen, daß die Klappe 10 in optimaler Weise zwischen Zuluft- und Umluftstellung umgeschaltet wird, d.h. es soll immer auf diejenige Stellung geschaltet werden, bei der die Schadstoffkonzentration der Innenluft optimal gering bleibt.

Dazu muß der Rechner "wissen", wie groß die Schadstoffkonzentration der Innenluft im Vergleich zur Schadstoffkonzentration der Außenluft ist.

Erfindungsgemäß wird nun zu diesem Zweck kein zusätzlicher Schadstoffsensor im Innenraum 1 eingesetzt. Vielmehr berechnet der Rechner 12 in nachfolgend erläuterter Weise, wie sich die Schadstoffkonzentration der Innenluft relativ zur Schadstoffkonzentration der Außenluft ändert.

Hierbei werden folgende Tatsachen berücksichtigt:

Bei gleichbleibender Schadstoffkonzentration in der Außenluft wird sich bei Zuluftbetrieb die Schadstoffkonzentration der Innenluft - nach einer gewissen Zeitspanne - an den entsprechenden Wert der Außenluft angleichen. Wenn sich nun die Schadstoffkonzentration der Außenluft während der Fahrt ändert, wird sich auch die Schadstoffkonzentration der Innenluft bei Zuluftbetrieb entsprechend ändern, wenn auch mit einer gewissen Verzögerung. Das Maß der Verzögerung ist im wesentlichen von der Leistung des Gebläses 4 abhängig und läßt sich durch Versuchsreihen feststellen. Die entsprechenden Daten lassen sich in einer für den Rechner 12 abrufbaren Weise im Rechner 12 bzw. einem zugeordneten Speicher ablegen, so daß der Rechner 12 in der Lage ist, bei Zuluftbetrieb die Schadstoffkonzentration der Innenluft aufgrund der vom Schadstoffsensor 11 abgegebenen Signale für die Schadstoffkonzentration der Außenluft zu ermitteln. Entsprechendes gilt auch für den Umluftbetrieb. Durch Versuchsreihen läßt sich ermitteln, in welcher Weise sich die Luftqualität im Innenraum 1 nach Einschalten des Umluftbetriebes aufgrund der Atemtätigkeit der Passagiere verschlechtert. Dabei kann auch das subjektive Empfinden der Passagiere berücksichtigt werden, die in der Regel einen lang anhaltenden Umluftbetrieb als unangenehm empfinden, d.h. anstelle des tatsächlichen Anstieges der Schadstoffkonzentration beim Umluftbetrieb kann auch der vermeintliche Anstieg der Schadstoffkonzentration der Innenluft berücksichtigt bzw. ermittelt werden. Wenn auch diese Erfahrungswerte dem Rechner 12 in einer zugreifbaren Form dargeboten werden, so kann auch beim Umluftbetrieb mittels des Rechners 12 ein Wert für die (tatsächliche oder vermeintliche) Schadstoffkonzentration der Innenluft ermittelt werden, indem der zuletzt vor Beginn des Umluftbetriebes ermittelte Wert der Schadstoffkonzentration der Innenluft entsprechend den bei Versuchen ermittelten Erfahrungswerten zeitabhängig abgeändert wird.

Damit "weiß" der Rechner 12 zu jedem Zeitpunkt, ob die Schadstoffkonzentrationen der Innenluft und der Außenluft annähernd gleich sind oder ob entweder die Innenluft oder die Außenluft eine vergleichsweise geringere Schadstoffkonzentration aufweist. In Abhängigkeit von diesem "Wissen", d.h. in Abhängigkeit von einem mittels des Rechners 12 durchführbaren Vergleiches kann dann die Klappe 10 so gesteuert werden, daß die Qualität der Innenluft immer optimal bleibt.

Sollte beispielsweise die Schadstoffkonzentration der Außenluft plötzlich stark ansteigen, so wird der Umluftbetrieb eingeschaltet. Denn damit wird eine geringere Verschlechterung der Innenluft erreicht als es der Fall wäre, wenn beim Zuluftbetrieb die zunehmend schadstoffbelastete Außenluft in den Innenraum 1 eingeblasen würde. Wenn aber die Schadstoffkonzentration in der Außenluft nur sehr allmählich ansteigt, so ist der Rechner 12 in der Lage, zu erkennen, daß in diesem Falle ein Zuluftbetrieb Vorteile bringt, denn jetzt würde beim Umluftbetrieb die Qualität der Innenluft schneller abnehmen als es bei Zuluftbetrieb aufgrund der Zufuhr der allmählich zunehmend belasteten Außenluft in den Innenraum 1 der Fall wäre.

Wenn andererseits aufgrund übermäßigen Schadstoffgehaltes der Außenluft der Umluftbetrieb eingeschaltet worden ist, so ist es möglich, auch bei wieder abnehmender Schadstoffkonzentration in der Außenluft zunächst noch den Umluftbetrieb aufrechtzuerhalten, weil der Rechner 12 "erkennen" kann, daß die Schadstoffkonzentration der Innenluft trotz des Umluftbetriebes relativ zur Schadstoffkonzentration in der Außenluft noch gering ist, so daß ein Einschalten des Zuluftbetriebes sogar trotz der sich bereits wieder verbessernden Außenluft eine Verschlechterung der Innenluft mit sich brächte.

Die Wirkungsweise der erfindungsgemäßen Vorrichtung bzw. des erfindungsgemäßen Verfahrens wird besonders deutlich bei Tunnelfahrt. Am Tunneleingang wird von einem zuvor in der Regel eingeschalteten Zuluftbetrieb aufgrund der sich schnell verschlechternden Außenluft auf Umluftbetrieb umgeschaltet. Wenn die Schadstoffkonzentration der Außenluft bei zunehmender Annäherung an den Tunnelausgang wieder abnimmt, bleibt der Umluftbetrieb zunächst noch aufrechterhalten, trotz der Verbesserung der Außenluft, bis die Schadstoffkonzentration in der Außenluft auf einen Wert in der Nähe des errechneten Wertes für die Schadstoffkonzentration in der Innenluft abgefallen ist oder diesen letzteren Wert unterschritten hat.

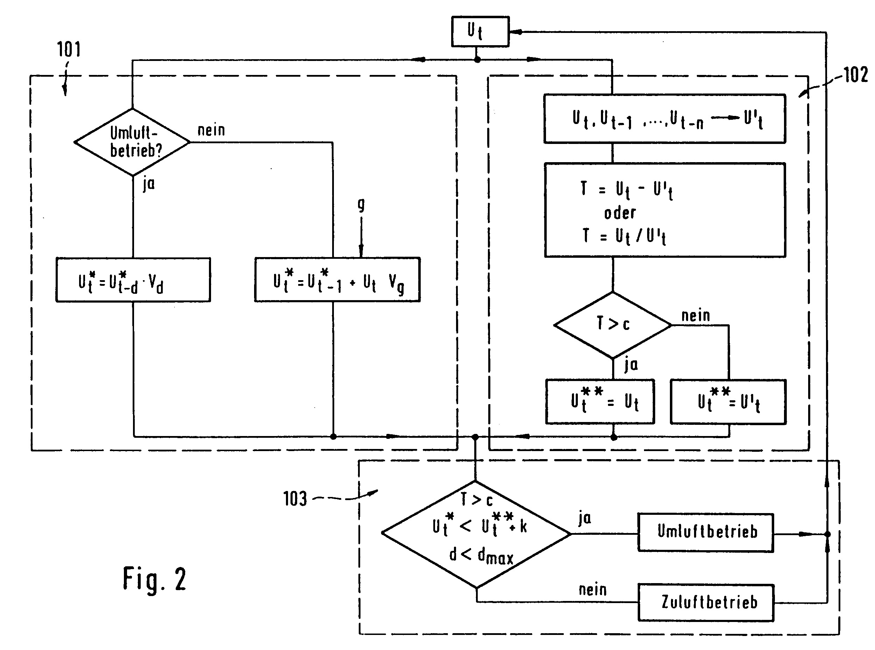

Nachfolgend wird die Arbeitsweise des Rechners 12 beispielhaft anhand des in Fig. 2 dargestellten Flußdiagrammes erläutert.

Gemäß dem in Fig. 2 dargestellten Flußdiagramm erzeugt der auf die Schadstoffkonzentration der Außenluft reagierende Schadstoffsensor 11 (vgl. Fig. 1) zu einem Abfragezeitpunkt t ein die Schadstoffkonzentration wiedergebendes Signal $U_t$.

Für die folgende Betrachtung wird nun davon ausgegangen, daß der Pegel dieses Signales $U_t$ bzw. der dieses Signal repräsentierende Zahlenwert mit zunehmender Schadstoffkonzentration ansteigt.

Mittels des Rechners 12 (vgl. Fig. 1) wird nun gemäß dem Abschnitt 101 der Fig. 2 aus dem Sensorsignal $U_t$ ein Signal bzw. ein Zahlenwert $U_t^*$ berechnet, welcher die Schadstoffkonzentration der Innenluft im Fahrzeug repräsentiert.

Gleichzeitig wird mittels des Rechners 12 gemäß dem Abschnitt 102 in Fig. 2 aus dem Sensorsignal $U_t$ ein Signal bzw. Zahlenwert $U_t^{**}$ erzeugt, welcher nachfolgend im Abschnitt 103 der Fig. 2 mit dem Signal bzw. dem Zahlenwert $U_t^*$ verglichen wird, um zu entscheiden, ob der Umluft- oder der Zuluftbetrieb eingeschaltet werden bzw. bleiben.

Sodann wird das beschriebene Verfahren mit einer erneuten Abfrage des Sensorsignales $U_t$ wiederholt usw.

Das die Schadstoffkonzentration im Innenraum repräsentierende Signal $U_t^*$ bzw. der entsprechende Zahlenwert können gemäß dem Abschnitt 101 in der nachfolgend dargestellten vorteilhaften Weise ermittelt werden.

Zunächst wird vom Rechner 12 abgefragt, ob das Belüftungssystem im Umluft- oder im Zuluftbetrieb arbeitet. Falls Umluftbetrieb vorliegt, wird $U_t^*$ berechnet als

$$U_t^* = U_{t-a}^* V_d,$$

wobei d die Zeitspanne ist, die seit der letzten Einschaltung des Umluftbetriebes verstrichen ist, und $V_d$ einen von dieser Zeitspanne d abhängigen Faktor darstellt, welcher den tatsächlichen und/oder vermeintlichen Anstieg der Schadstoffkonzentration im Innenraum bei Umluftbetrieb repräsentiert. Die Faktoren $V_d$ stellen Erfahrungswerte dar, die im Rechner 12 gespeichert sind bzw. auf die der Rechner 12 Zugriff hat. Falls kein Umluftbetrieb vorliegt, d.h. wenn das Belüftungssystem im Zuluftbetrieb arbeitet, wird $U_t^*$ berechnet als

$$U_t^* = U_{t-1}^* + U_t V_g.$$

Hierbei ist $U_{t-1}^*$ das die Schadstoffkonzentration repräsentierende Signal bzw. der entsprechende Zahlenwert, welches bzw. welcher vom Rechner für den dem Zeitpunkt t vorausgehenden Abfragezeitpunkt t-1 ermittelt wurde. $V_g$ stellt einen Faktor dar, der einerseits von der Stromstärke der in den Innenraum einströmenden Luft bzw. der diese Stromstärke repräsentierenden Leistung g des Gebläses 4 (vgl. Fig. 1) und andererseits von der Größe des Innenraumes des Fahrzeuges abhängt. Die Faktoren $V_g$ stellen wiederum Erfahrungswerte dar, die in einer für den Rechner 12 zugreifbaren Weise gespeichert sind. Gegebenenfalls können die Faktoren $V_g$ auch für unterschiedliche Fahrgeschwindigkeiten des Fahrzeuges unterschiedlich sein, um berücksichtigen zu können, daß der Zustrom von Luft in den Fahrzeuginnenraum beim Zuluftbetrieb auch von der Fahrgeschwindigkeit abhängt. In diesem Falle muß der Rechner 12 neben Signalen, die die augenblickliche Leistung des Gebläses darstellen, zusätzlich Signale erhalten, die die Fahrgeschwindigkeit repräsentieren. Auf diese Weise kann mit den Faktoren $V_g$ berücksichtigt werden, daß sich die Schadstoffkonzentration im Fahrzeuginnenraum gegenüber der Schadstoffkonzentration in der Außenluft mit einer gewissen Verzögerung ändert, weil ein vollständiger Austausch der Luft im Fahrzeuginnenraum relativ langsam (beispielsweise in ca. 1/2 Minute) erfolgt.

Gemäß dem Abschnitt 102 der Fig. 2 wird aus den Signalen $U_t$ des Schadstoffsensors 11 (vgl. Fig. 1) ein Mittelwert $U'_t$ ermittelt. Dazu werden zu vorausgehenden Abfragezeitpunkten t-1 bis t-n abgefragte Sensorsignale $U_{t-1}$ bis $U_{t-n}$ neben dem augenblicklichen Sensorsignal $U_t$ mit berücksichtigt; hierbei ist n eine vorgegebene ganze Zahl. Beispielsweise kann aus den angegebenen Sensorsignalen der arithmetische Mittelwert gebildet werden. Nachfolgend wird ein Wert T bestimmt, welcher ein Maß dafür ist, inwieweit die Schadstoffkonzentration in der Außenluft eine ansteigende oder abfallende Tendenz hat. Beispielsweise kann T bestimmt werden als

$$T = U_t - U'_t$$

oder

$$T = U_t/U'_t.$$

Nachfolgend wird abgefragt, ob der Wert von T größer ist als eine vorgegebene Konstante c. Sollte dies der Fall sein, hat die Schadstoffkonzentration in der Außenluft zum Abfragezeitpunkt t eine stark steigende Tendenz. In diesem Falle wird $U_t^{**}$ bestimmt als

$$U_t^{**} = U_t.$$

Sollte dagegen der Wert von T die vorgegebene Konstante c nicht überschreiten, hat die Schadstoffkonzentration der Außenluft allenfalls eine mäßig ansteigende Tendenz, im Regelfalle aber eine gleichbleibende oder sogar fallende Tendenz. In diesem Falle wird $U_t^{**}$ bestimmt als

$$U_t^{**} = U'_t.$$

Nun wird gemäß dem Abschnitt 103 der Fig. 2 ein Vergleich zwischen $U_t^*$ und $U_t^{**}$ vorgenommen, um hinsichtlich Umluft- bzw. Zuluftbetriebes zu entscheiden. Vorzugsweise werden dabei drei Kriterien überprüft. Dabei wird bzw. bleibt der Umluftbetrieb eingeschaltet, wenn alle drei Kriterien gleichzeitig vorliegen.

Die zu überprüfenden Kriterien umfassen die Abfrage, ob der Wert von T größer ist als die Konstante c, d.h. ob die Schadstoffkonzentration in der Außenluft eine stark steigende Tendenz hat. Des weiteren wird überprüft, ob $U_t^*$ kleiner ist als $U_t^{**}$ zuzüglich einer vorgegebenen kleinen Konstante k, d.h. ob die vom Rechner ermittelte Schadstoffkonzentration im Fahrzeuginnenraum allenfalls geringfügig größer als die Schadstoffkonzentration der Außenluft ist. Schließlich wird noch untersucht, ob d kleiner ist als $d_{max}$, d.h. ob die Zeitdauer d eines gegebenenfalls bereits eingeschalteten Umluftbetriebes kleiner als der Schwellwert $d_{max}$ ist.

Falls die genannten Kriterien vorliegen, wird bzw. bleibt der Umluftbetrieb eingeschaltet. Andernfalls wird bzw. bleibt der Zuluftbetrieb eingeschaltet.

Die im Abschnitt 102 dargestellte Verarbeitung der Signale $U_t$ ist besonders vorteilhaft, weil auf diese Weise gewährleistet werden kann, daß frühzeitig auf Umluftbetrieb umgeschaltet wird, wenn die Schadstoffkonzentration der Außenluft eine stark steigende Tendenz aufweist. Andererseits erfolgt nachfolgend eine Umschaltung auf Zuluftbetrieb erst dann, wenn damit in jedem Falle eine Verbesserung der Innenluft erreicht werden kann bzw. wenn damit die Qualität der Innenluft nicht mehr verschlechtert wird. Damit ist gleichzeitig eine wünschenswerte Schalthysterese beim Umschalten zwischen Umluft- und Zuluftbetrieb gewährleistet, d.h. die entsprechenden Umschaltungen können zeitlich nicht beliebig kurz aufeinanderfolgen.

Im übrigen bleibt der Zuluftbetrieb nach seiner Einschaltung aufrechterhalten, solange sich die Schadstoffkonzentration der Außenluft nur langsam ändert.

Insgesamt ergibt sich also ein optimales Betriebsverhalten, welches auch durch Eingriff des Fahrers praktisch nicht mehr verbessert werden könnte.

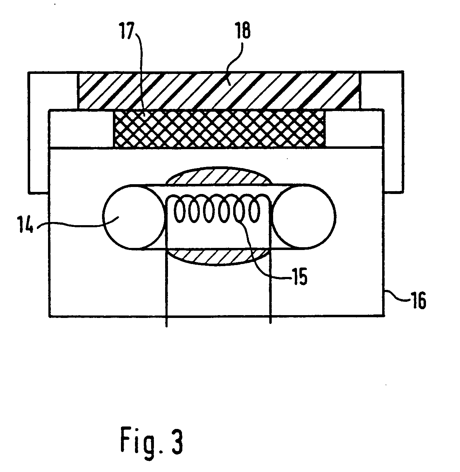

Fig. 3 zeigt nun eine besonders vorteilhafte Anordnung eines Schadstoffsensors. Dieser besteht im wesentlichen aus einem Keramikkörper 14, dessen elektrischer Widerstand sich unter dem Einfluß der Schadstoffe konzentrationsabhängig ändert. Da dieser Effekt jedoch in der Regel nur bei höheren Temperaturen hinreichend ausgeprägt ist, besitzt der Keramikkörper 14 eine Heizung 15.

Der Keramikkörper 14 und dessen Heizung 15 sind in einem Sensorgehäuse 16 untergebracht, dessen in Fig. 3 obere Seite offen ist, wobei in der Öffnung ein Stahlnetzgewebe 17 angeordnet ist, welches im wesentlichen nur Sicherheitsfunktion hat und verhindern soll, daß der gegebenenfalls heiße Keramikkörper 14 oder die Heizung 15 berührt werden können. Im übrigen ist die Öffnung des Sensorgehäuses 16 durch eine gasdurchlässige Membran 18, beispielsweise aus Teflon, abgeschlossen.

Da die Membran 18 gasdurchlässig ist, hat die Zusammensetzung der Atmosphäre im Sensorgehäuse 16 praktisch die gleiche Zusammensetzung wie die Atmosphäre außenseitig des Sensorgehäuses 16. Jedoch wird sicher verhindert, daß der Keramikkörper 14 bzw. die Heizung 15 des Schadstoffsensors starken Luft- bzw. Gasströmungen und/oder Wassertropfen (bei Regen oder Nebel) ausgesetzt werden können. Dies ist gleichbedeutend damit, daß im Sensorgehäuse 16 weitestgehend gleichbleibende Betriebsbedingungen aufrechterhalten werden können und dementsprechend die erzeugbaren Sensorsignale sich nur allenfalls geringfügig ändern, wenn die Luft bzw. die Gase außenseitig des Sensorgehäuses 16 langsamer oder schneller strömen und/oder das Gehäuse 16 von Regen oder Nebel beaufschlagt wird. Auf diese Weise kann gewährleistet werden, daß die Sensorsignale praktisch nur von der Schadstoffkonzentration der umgebenden Luft bzw. Gase abhängig sind.

Im Beispiel der Fig. 1 kann das in Fig. 3 dargestellte Sensorgehäuse am Eingangskanal 8 derart angeordnet sein, daß der Innenraum des Sensorgehäuses 16 gegenüber dem Innenraum des Eingangskanales 8 durch die Membran 18 abgesperrt wird.

**Patentansprüche**

1. Vorrichtung zur Steuerung der Belüftung eines Innenraumes (1), insbesondere bei Kraftfahrzeugen, in Abhängigkeit von Signalen ($U_t$) eines im wesentlichen nur von Außenluft beaufschlagten Schadstoffsensors (14), mit von der Schadstoffkonzentration abhängiger Umschaltung zwischen Zuluft- und Umluftbetrieb, wobei mittels eines Rechners (12) unter Berücksichtigung der Sensorsignale ($U_t$), der jeweiligen Betriebsweise (Zuluft- oder Umluftbetrieb) sowie vorgegebener und abrufbarer Erfahrungswerte eine mit der Schadstoffkonzentration im Innenraum (1) korrelierte erste Größe ($U_t^*$) bestimmt und mit einer aus den Sensorsignalen ($U_t$) abgeleiteten, mit der Schadstoffkonzentration der Außenluft korrelierten zweiten Größe ($U_t^{**}$) verglichen wird und je nach dem Ergebnis dieses Vergleiches entweder der Zuluft- oder der Umluftbetrieb eingeschaltet werden bzw. bleiben, **dadurch gekennzeichnet,** daß der Sensor (14) in einem Gehäuse (16), dessen Wand - zumindest bereichsweise - für Gase sowie die zu überwachenden Schadstoffe durchlässig ist, gegen starke Luft- bzw. Gasströmung und/oder Wassertropfen geschützt untergebracht ist.

2. Vorrichtung nach Anspruch 1, **dadurch gekennzeichnet,** daß das im übrigen geschlossene Gehäuse zumindest eine Öffnung aufweist, die durch eine gasdurchlässige Membran (18) abgeschlossen ist.

3. Vorrichtung nach Anspruch 1, **dadurch gekennzeichnet,** daß das im übrigen geschlossene Gehäuse zumindest eine Öffnung aufweist, die durch ein Vlies abgeschlossen ist.

4. Vorrichtung nach Anspruch 1, **dadurch gekennzeichnet,** daß das Gehäuse (16) eine offene Seite aufweist, wobei in der Öffnung ein Stahlnetzgewebe (17) angeordnet und die Öffnung im übrigen durch eine gasdurchlässige Membran (18) abgeschlossen ist.

5. Vorrichtung nach einem der Ansprüche 1 bis 4, **dadurch gekennzeichnet,** daß die die Schadstoffkonzentration der Außenluft wiedergebene zweite Größe ($U_t^{**}$) bzw. das dieselbe repräsentierende Signal taktweise aktualisiert werden, wobei im Falle einer stark ansteigenden Tendenz der Schadstoffkonzentration in der Außenluft das jeweils letzte Signal des Sensors (14) bzw. dessen Meßwert ($U_t$) und bei mäßig steigender, gleichbleibender bzw. fallender Tendenz der Schadstoffkonzentration der Außenluft ein Mittelwert ($U_t^{^)}$) weiterverarbeitet werden, welcher unter Berücksichtigung einer vorgegebenen Anzahl vorangehender Werte gebildet wird.

6. Vorrichtung nach einem der Ansprüche 1 bis 5, **dadurch gekennzeichnet,** daß die Erfahrungswerte eine sich beim Umluftbetrieb einstellende Tendenz zur Verschlechterung der Luftqualität im Innenraum und/oder eine beim Zuluftbetrieb auftretende verzögerte und/oder abgeschwächte Angleichung der Luftqualität im Innenraum an die Luftqualität der Außenluft umfassen.

7. Vorrichtung nach einem der Ansprüche 1 bis 6, **dadurch gekennzeichnet,** daß das die Qualität der Innenluft wiedergebene Signal ($U_t^*$) entsprechend den die Schadstoffkonzentration der Außenluft repräsentierenden Signalen ($U_t^{**}$) ausgebildet bzw. strukturiert ist und eine fiktive Außenluft-Schadstoffkonzentration darstellt, bei der die jeweilige Qualität der Innenluft unverändert bliebe bzw. nicht verbessert werden kann.

**Claims**

1. Device for controlling the ventilation of an internal space (1), particularly in motor vehicles, as a function of signals ($U_t$) from a pollutant sensor (14) essentially subjected only to external air, having switch-over between air supply operation and air recirculation operation depending on the pollutant concentration, it being the case that by means of a computer (12), taking account of the sensor signals ($U_t$), the current mode of operation (air supply operation or air recirculation operation) and specified experience values which can be called up, a first quantity ($U_t^*$) correlated with the pollutant concentration in the internal space (1) is determined and is compared with a second quantity ($U_t^{**}$) correlated with the pollutant concentration of the external air and derived from the sensor signals ($U_t$), and that either the air supply operation or the air recirculation operation is switched on or retained depending on the result of this comparison, characterized in that the sensor (14) is accommodated, in a fashion protected against strong flow of air or gas and/or water drops, in a casing (16) whose wall - at least in some areas - is permeable to gases and to the pollutants to be monitored.

2. Device according to Claim 1, characterized in that the otherwise closed casing has at least one opening which is closed by a gas-permeable membrane (18).

3. Device according to Claim 1, characterized in that the otherwise closed casing has at least one opening which is closed by a mat.

4. Device according to Claim 1, characterized in that the casing (16) has an open side, a steel gauze (17) being arranged in the opening, and the opening otherwise being closed by a gas-permeable membrane (18).

5. Device according to one of Claims 1 to 4, characterized in that the second quantity ($U_t^{**}$) reproducing the pollutant concentration of the external air or the signal representing the same is updated in pulses, the current last signal of the sensor (14) or of its measured value ($U_t$) being further processed in the case of a strongly increasing tendency of the pollutant concentration in the external air, and an average value ($U'_t$), which is formed taking account of a specified number of preceding values, being further processed in the case of a moderately rising, constant or falling tendency of the pollutant concentration of the external air.

6. Device according to one of Claims 1 to 5, characterized in that the experience values include a tendency of the air quality in the internal space to deteriorate with air recirculation operation and/or a delayed and/or weakened equalization between the air quality in the internal space and the air quality of the external air occurring in the case of air supply operation.

7. Device according to one of Claims 1 to 6, characterized in that the signal ($U_t^*$) reproducing the quality of the internal air is formed or structured corresponding to the signals ($U_t^{**}$) representing the pollutant concentration of the external air and represents a fictitious external air pollutant concentration at which the current quality of the internal air remains unaltered or cannot be improved.

**Revendications**

1. Dispositif destiné à commander la ventilation d'un volume intérieur (1), en particulier dans les véhicules automobiles, en fonction des signaux ($U_t$) d'un capteur de substances polluantes (14) attaqué sensiblement uniquement par l'air extérieur, comportant une inversion entre le mode air extérieur et le mode recyclage en fonction de la concentration des substances polluantes, dispositif dans lequel, au moyen d'un ordinateur (12), et sur la base des signaux ($U_t$) du capteur, du mode de travail existant au moment considéré (mode air extérieur ou mode recyclage), ainsi que de valeurs expérimentales prédéterminées et qui peuvent être appelées, une première grandeur ($U_t^*$) qui est en corrélation avec la concentration de substances polluantes dans le volume intérieur (1) est déterminée et comparée à une deuxième grandeur ($U_t^{**}$), dérivée des signaux ($U_t$) du capteur, qui sont en corrélation avec la concentration de substances polluantes de l'air extérieur, et selon le résultat de la comparaison, le mode air extérieur ou le mode recyclage est mis en marche ou reste en marche,
caractérisé
en ce que le capteur (14) est logé, à l'abri des courants d'air ou de gaz intenses et/ou des gouttes d'eau, dans un boîtier (16) dont la paroi - du moins par régions - est perméable aux gaz ainsi qu'aux substances polluantes à surveiller.

2. Dispositif selon la revendication 1,
caractérisé
en ce que le boîtier, qui est fermé par ailleurs, présente au moins une ouverture qui est obturée par une membrane (18) perméable aux gaz.

3. Dispositif selon la revendication 1,
caractérisé
en ce que le boîtier, qui est fermé par ailleurs, présente au moins une ouverture qui est obturée par un non tissé.

4. Dispositif selon la revendication 1,
caractérisé
en ce que le boitier (16) présente un côté ouvert, une toile d'acier (17) étant agencée dans l'ouverture et l'ouverture étant par ailleurs obturée par une membrane (18) perméable aux gaz.

5. Dispositif selon une des revendications 1 à 4,
caractérisé
en ce que la deuxième grandeur ($U_t^{**}$), qui reproduit la concentration de substances polluantes de l'air extérieur, ou le signal qui représente cette grandeur, est actualisé périodiquement, le signal du capteur (14) arrivant en dernier lieu ou sa valeur de mesure ($U_t$) étant retraité dans le cas d'une tendance fortement croissante de la concentration de substances polluantes dans l'air extérieur, et une valeur moyenne ($U_t^{'}$) étant retraitée en présence d'une tendance modérément croissante, constante ou descendante de la concentration de substances polluantes de l'air extérieur, cette valeur moyenne étant formée sur la base d'un nombre prédéterminé de valeurs précédentes.

6. Dispositif selon une des revendications 1 à 5,
caractérisé
en ce que les valeurs expérimentales comprennent une tendance à la détérioration de la qualité de l'air dans le volume intérieur, qui s'établit lors du mode recyclage, et/ou une égalisation retardée et/ou affaiblie de la qualité de l'air dans le volume intérieur à la qualité de l'air de l'air extérieur, qui se produit dans le mode air extérieur.

7. Dispositif selon une des revendications 1 à 6, caractérisé
en ce que le signal ($U_t^{**}$) qui reproduit la qualité de l'air intérieur est formé ou structuré en fonction des signaux ($U_t^{**}$) qui représentent la concentration de substances polluantes dans l'air extérieur, et représente une concentration fictive des substances polluantes dans l'air extérieur en présence de laquelle la qualité de l'air intérieur existant au moment considéré resterait inchangée ou ne pourrait pas être améliorée.

Fig.1

EP 0 501 127 B1

Fig. 2

Fig. 3